**Europäisches Patentamt**

**European Patent Office**

**Office européen des brevets**

(19)

(11) Publication number : **0 348 362 B1**

(12) # EUROPEAN PATENT SPECIFICATION

(45) Date of publication of patent specification :
**15.04.92 Bulletin 92/16**

(51) Int. Cl.⁵ : **B60R 9/04**

(21) Application number : **89830274.0**

(22) Date of filing : **20.06.89**

(54) **A slidable luggage rack which can be fitted to the roof of a motor vehicle, particularly for transporting ladders.**

(30) Priority : **24.06.88 IT 5325288 U**

(43) Date of publication of application :
**27.12.89 Bulletin 89/52**

(45) Publication of the grant of the patent :
**15.04.92 Bulletin 92/16**

(84) Designated Contracting States :
**AT BE CH DE ES FR GB GR IT LI LU NL SE**

(56) References cited :
**EP-A- 0 027 531**
**GB-A- 2 177 055**
**US-A- 3 963 136**
**US-A- 4 081 095**

(73) Proprietor : **ILCA MAGGIORA S.p.A**
**Via Natale Palli, 8 Borgo San Pietro**
**I-10024 Moncalieri (Torino) (IT)**

(72) Inventor : **Maggiora, Bruno c/o I.L.C.A.**
**Maggiora S.p.A.**
**Via Natale Palli, 8 Borgo San Pietro**
**I-10021 Moncalieri (Torino) (IT)**

(74) Representative : **Notaro, Giancarlo et al**
**c/o Jacobacci-Casetta & Perani S.p.A. Via**
**Alfieri, 17**
**I-10121 Torino (IT)**

## Description

The present invention relates to a slidable luggage rack which can be fitted to the roof of a motor vehicle, and is intended particularly for transporting ladders.

More particularly, the present invention relates to a luggage rack according to the pre-characterising portion of claim 1.

A luggage rack of this type is known from GB-A-2 177 055 which shows a luggage rack having a movable frame provided on its lower side with a pair of tracks which cooperates with respective wheels. The movable frame is further provided with a pair of wheels arranged near the inner end of each track, which run inside a respective guide element fixed to the roof of the vehicle. The tracks rest on the wheels when the movable frame is in its raised position and during a first part of the movement of the frame from the raised to the lowered position. However, in the last part of this movement and when the frame is in its lowered position, the tracks are raised from the wheels. So, when the frame is in its lowered position, it must rest on the side wall of the vehicle since the tracks do not contribute to support the frame and the wheels which run inside the guide elements cannot alone keep the frame raised from the body of the vehicle. The movable frame could therefore damage the body of the vehicle, particularly when a heavy load, such as ladders or the like, is intended to be loaded on the rack.

In order to overcome the above-mentioned disadvantage, the present invention provides a luggage rack according to claim 1.

In the luggage rack according to the present invention when the movable frame is in its lowered position it is not into contact with the body of the vehicle thanks to the combined support action of the tracks and the guide elements.

Further characteristics and advantages of the present invention will become clear from the detailed description which follows with reference to the appended drawings, provided by way of non-limiting example, in which:

Figures 1 and 2 show a luggage rack according to the present invention in the transporting and loading configurations respectively,

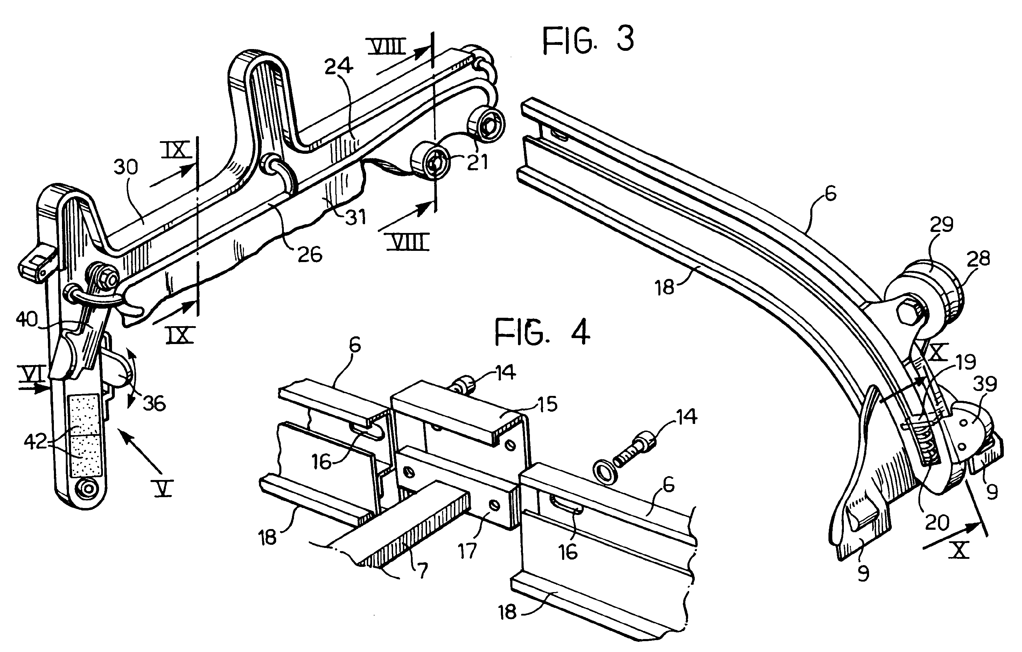

Figure 3 is an exploded perspective view of two parts of the luggage rack,

Figure 4 is an exploded perspective view of the detail indicated by the arrow IV in Figure 2, on an enlarged scale,

Figures 5 and 6 are perspective views taken on the arrows V and VI of Figure 3 respectively, on an enlarged scale,

Figure 7 is a front elevation taken on the arrow VII of Figure 5,

Figures 8 and 9 are sections taken on the lines VIII-VIII and IX-IX of Figure 3 respectively, and Figure 10 is a section taken on the line X-X of Figure 3 on an enlarged scale.

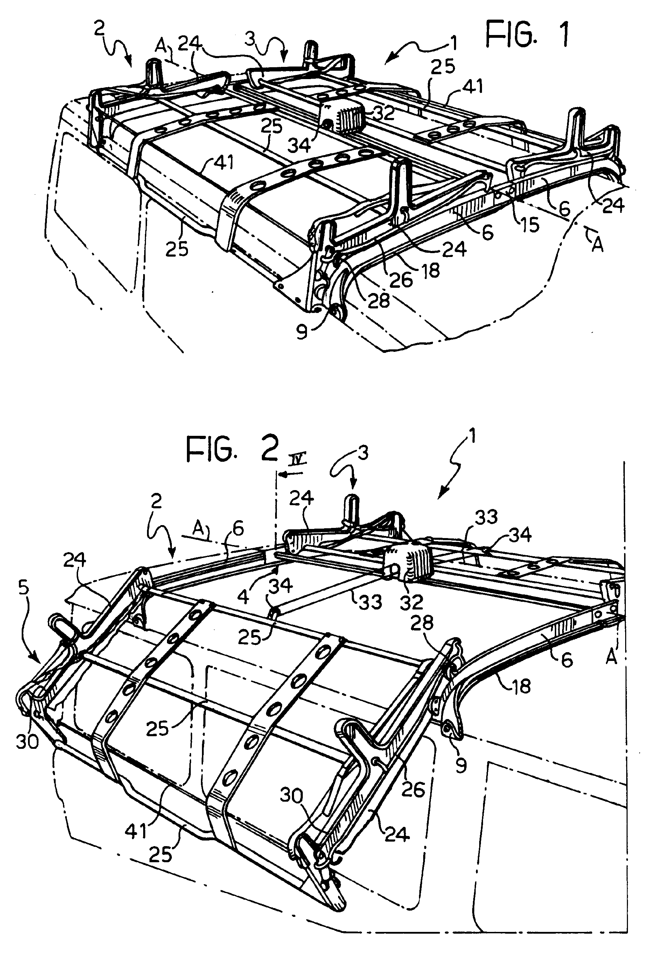

In Figures 1 and 2, a luggage rack according to the present invention is indicated 1 and is mounted on the roof of a vehicle shown in broken outline in the drawings. The luggage rack 1 as a whole is constituted by two identical ladder-carrying units 2 and 3 arranged symmetrically about the longitudinal median axis A of the luggage rack 1 and interconnected in correspondence with that axis.

Each unit comprises a support structure 4 and a movable frame 5. The frame can slide relative to the structure 4 and is movable between a raised transporting position shown in Figure 1, and a lowered loading position shown in Figure 2.

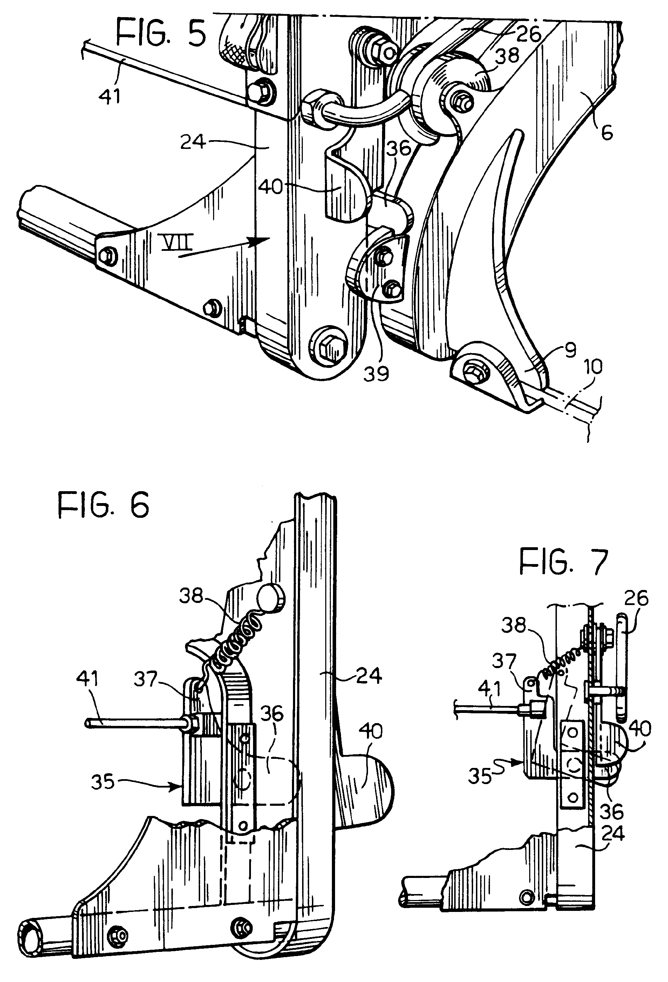

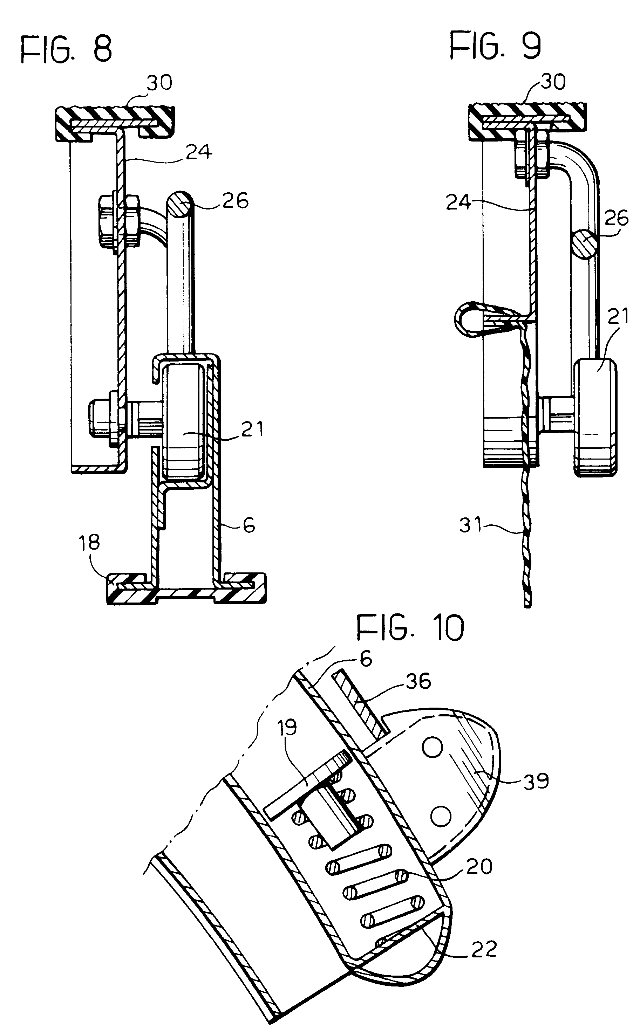

The support structure 4 is constituted essentially by two profiled guide members 6 interconnected by a bar 7 arranged on the longitudinal axis A of the luggage rack 1. The guides 6 each have an attachment 9 at their outer ends for fixing them to a part 10 of the bodywork of the vehicle. The inner end of each guide 6 is connected to the inner end of the guide 6 of the other luggage rack unit by means of screws 14 which pass through a bracket 15 and slots 16 formed in the lateral surfaces of the guides 6 and are engaged in an element 17 fixed to the bar 7 (Figure 4). The slots 16 enable small adjustments of the length of the luggage rack 1 for its adaptation to vehicles of different types. The lower sides of the guides 6 bear on the roof of the vehicle with the interposition of a protective sheath 18 of plastics material. Seen from the side, the guides 6 are arcuate in shape with a more accentuated curvature near their outer ends. The guide members 6 have channel-shaped cross-sections with their open sides facing inwards and their internal channels constituting guides for the movable frames 5, as will be described below. The outer end of each guide 6 is closed by an end wall 22 near which is a stop buffer 19 with a helical spring 20 interposed between the buffer 19 and the wall 22 (Figure 10).

The movable frame 5 comprises two spaced-apart side elements 24 interconnected by bars 25. Each element 24 has two wheels 21 at its inner end, arranged close together and located within the corresponding guide 6. Each element 24 carries a shaped track 26 of circular section on its outer lateral surface, the track bearing on a wheel 28 arranged on the upper part of the profiled guide 6 at its outer end. The wheel 28 has a circumferential groove 29 which provides a bearing surface for the track 26. The elements 24 have upper parts 30 which are shaped specifically for supporting ladders (not illustrated). An upright strip 31 of plastics material is connected to each side element 24 and faces the inner side of the guide channel 6 to protect the aperture of the guide from the ingress of foreign bodies.

A roller 32 is fixed to the bar 7 and a spring-biassed cable 33 projects therefrom to cooperate with a transmission pulley 34 connected to the movable frame 5. The roller 32 exerts a force which biasses the frame 5 towards its raised position and therefore facilitates the lowering and raising of the frame 5.

The frame 5 is provided with a device for locking the frame 5 in the raised position. This device comprises an L-shaped lever 35 arranged in correspondence with the outer part of each side element 24 of the frame 5. The lever 35 is articulated to the side element 24 and is arranged with one arm 36 horizontal and parallel to the outer side of the frame 5, and with one arm 37 facing inwardly of the frame 5. The lever 35 is provided with a spring 38 which biasses the arm 36 towards the horizontal position. When the frame 5 is raised, the arm 36 of the lever 35 engages a stop member 39 fixed to the outer end of the profiled guide. In correspondence with each lever 35 there is also a safety lever 40 which is articulated to the side element 24 about an axis transverse the axis of articulation of the lever 35. When the lever 35 is engaged with the stop member 39, the safety lever 40 is brought manually over the arm 36 of the lever 35. There is slight friction in the articulated connection of the safety lever 40 for preventing the undesired movement of the lever 40. The end of a cable 41 is connected to the arm 37 of the lever 35, and its other end is connected to the corresponding lever 35 mounted on the second side element 24 of the frame 5.

Reflective elements 42 are fixed to the outer lateral surface of each side member 24 of the frame 5 for indicating the greater width of the vehicle when it is stationary with the frame 5 in the open configuration.

In order to move the luggage rack 1 from the transporting configuration illustrated in Figure 1 to the loading configuration of Figure 2, the safety levers 40 must first be pivoted upwards. The central part of the cable 41 is then operated manually so as simultaneously to release the two levers 35 from the respective stop members 39. The arcuate shape of the guide sections 6 and the shaped form of the track 26 of the side element 24 mean that, when the movable frame 5 is in the open configuration, it is situated in a position lower than the roof of the vehicle.

**Claims**

1. A slidable luggage rack which can be fitted to the roof of a motor vehicle, particularly for transporting ladders, comprising:
 – a support structure (4) which has attachments for fixing it to the roof of the vehicle and is provided at its two lateral ends with two curved channel-sectioned guide members (6), and
 – a movable frame (5) mounted for sliding on the support structure (4) and movable between a raised transporting position and a lowered loading position, the frame (5) comprising two side elements (24) each of which is provided with two wheels (21) which are arranged close together near its inner end and which can run in one of the guide members (6) of the support structure, each side element (24) of the slidable frame (5) being provided with a track (26) which cooperates with a wheel (28) supported on top of the support structure (4) near the outer side of the luggage rack (1);
 characterised in that each track (26) is placed on the outer side of the respective side element (24) and in that the tracks (26) and the guide elements (6) are shaped in such a way that each track (26) rests on the respective wheel (28) when the movable frame (5) is in the lowered position.

2. A luggage rack according to Claim 1, which also includes a device for locking the movable frame to the support structure, characterised in that the locking device comprises an L-shaped lever (35) which is articulated to the movable frame (5) and biassed by resilient means (38) towards the closed position and which engages a retaining element (39) fixed to the support structure (4).

3. A luggage rack according to Claim 2, characterised in that the movable frame (5) has two locking levers (35) each articulated to a respective side element (24) of the movable frame (5) with one arm arranged vertically and facing inwardly of the frame (5), two upright arms of the two locking levers (35) being interconnected by a cable (41) for the simultaneous release of the two levers (35).

4. A luggage rack according to Claim 3, characterised in that each locking lever (35) is provided with a safety lever (40) articulated to the movable frame (5) about an axis perpendicular to the axis of articulation of the locking lever (35).

**Patentansprüche**

1. Beweglicher Gepäckträger, der auf dem Dach eines Kraftfahrzeugs angebracht werden kann, insbesondere zum Transport von Leitern, mit:
 – einer Trägerstruktur (4), die Befestigungen zum ihrer Befestigung am Fahrzeugdach besitzt und an ihren beiden seitlichen Enden mit zwei gekrümmten Führungselementen (6) mit kanalförmigem Querschnitt versehen ist, und
 – einem beweglichen Rahmen (5), der zum Gleiten auf der Trägerstruktur (4) montiert ist und zwischen einer angehobenen Transportstellung und einer abgesenkten Ladeposition beweglich ist, wobei der Rahmen (5) zwei Seitenelemente (24) umfaßt, die jeweils mit zwei Rädern (21) versehen sind, die nahe beieinander, in der Nähe ihrer inneren Enden angeordnet sind und die in einem der Führungselemente (6) der Trägerstruktur laufen können, wobei jedes Seitenelement (24) des beweglichen Rahmens (5) mit einer Schiene (26) versehen ist, die mit einem Rad (28) zusammenwirkt, das auf der Trägerstruktur (4) in der Nähe der Außenseite des Gepäckträgers (1) getragen wird;

dadurch gekennzeichnet, daß jede Schiene (26) auf der Außenseite des jeweiligen Seitenelements (24) angeordnet ist und daß die Schienen (26) und die Führungselemente (6) so geformt sind, daß jede Schiene (26) auf dem jeweiligen Rad (28) ruht, wenn der bewegliche Rahmen (5) in der abgesenkten Position ist.

2. Gepäckträger nach Anspruch 1, der außerdem eine Vorrichtung zum Verriegeln des beweglichen Rahmens mit der Trägerstruktur umfaßt, dadurch gekennzeichnet, daß die Verriegelungsvorrichtung einen L-förmigen Hebel (35) umfaßt, der gelenkig mit dem beweglichen Rahmen (5) verbunden ist und durch ein Federvorrichtung (38) in die Verschlußstellung vorgespannt ist und der ein Rückhalteelement (39) ergreift, das an der Trägerstruktur (4) befestigt ist.

3. Gepäckträger nach Anspruch 2, dadurch gekennzeichnet, daß der bewegliche Rahmen (5) zwei Verriegelungshebel (35) besitzt, die jeweils gelenkig mit einem jeweiligen Seitenelement (24) des beweglichen Rahmens (5) verbunden sind, wobei ein Arm vertikal angeordnet ist und in das Innere des Rahmens (5) zeigt, wobei die beiden aufrechten Arrme der Verriegelungshebel (35) über ein Kabel (41) zum gleichzeitigen Loslassen der beiden Hebel (35) verbunden sind.

4. Gepäckträger nach Anspruch 3, dadurch gekennzeichnet, daß jeder Verriegelungshebel (35) mit einem Sicherungshebel (40) versehen ist, der mit dem beweglichen Rahmen (5) gelenkig um eine Achse senkrecht zur Gelenkachse des Verriegelungshebels (35) verbunden ist.

## Revendications

1. Galerie coulissante qui peut être montée sur le toit d'un véhicule à moteur, en particulier pour le transport d'échelles, comprenant:
- une structure de support (4) qui présente des fixations pour la fixer sur le toit d'un véhicule et est pourvue, sur ses deux extrémités latérales, de deux organes de guidage (6) incurvés, à section transversale en forme de canal, et
- un châssis mobile (5) monté pour coulisser sur la structure de support (4) et susceptible de se déplacer entre une position de transport levée et une position de chargement baissée, le châssis (5) comprenant deux éléments latéraux (24), pourvus chacun de deux roues (21) qui sont disposées de façon proche l'une de l'autre, près de son extrémité intérieure et qui peuvent s'étendre dans l'un des organe de guidage (6) de la structure de support, chaque élément latéral (24) du châssis coulissant (5) étant pourvu d'une glissière (26) qui coopère avec une roue (28), montée sur la face supérieure de la structure de support (4), près du côté extérieur de la galerie (1);

caractérisée en ce que chaque glissière (26) est placée sur le côté extérieur de l'élément latéral (24) correspondant et en ce que les glissières (26) et les éléments de guidage (6) sont formés de façon que chaque glissière (26) repose sur la roue (28) correspondante, lorsque le châssis mobile (5) est dans la position baissée.

2. Galerie selon la revendication 1, qui comprend également un dispositif pour le verrouillage du châssis mobile à la structure de support, caractérisée en ce que le dispositif de verrouillage comprend un levier (35) en forme de L, qui est articulé par rapport au châssis mobile (5) et poussé par un moyen élastique (38) vers la position fermée, et qui vient en contact avec un élément de retenue (39) fixé à la structure de support (4).

3. Galerie selon la revendication 2, caractérisée en ce que le châssis mobile (5) présente deux leviers de verrouillage (35), chacun articulé par rapport à un élément latéral (24) correspondant du châssis mobile (5), avec un bras disposé verticalement et faisant face vers l'intérieur du châssis (5), deux bras verticaux des deux leviers de verrouillage (35) étant interconnectés à l'aide d'un câble (41) pour le relâchement simultané des deux leviers (35).

4. Galerie selon la revendication 3, caractérisée en ce que chaque levier de verrouillage (35) est pourvu d'un levier de sécurité (40), articulé par rapport au châssis mobile (5), autour d'un axe perpendiculaire à l'axe d'articulation du levier de verrouillage (35).

FIG. 1

FIG. 2

FIG. 3

VIII

24

IX

30

31

21

26

VIII

IX

40

VI

36

42

V

FIG. 4

6

14

15

16

14

18

6

17

16

9

18

6

18

29

28

19

39

X

20

9

X

9

EP 0 348 362 B1

FIG. 5

FIG. 6

FIG. 7

FIG. 8

FIG. 9

FIG. 10